Europäisches Patentamt

(19) European Patent Office

Office européen des brevets

(11) Publication number: **0 062 973**

**A2**

(12) **EUROPEAN PATENT APPLICATION**

(21) Application number: **82301370.1**

(22) Date of filing: **17.03.82**

(51) Int. Cl.³: **B 29 D 3/02**

(30) Priority: **13.04.81 JP 52730/81 U**

(43) Date of publication of application:
**20.10.82 Bulletin 82/42**

(84) Designated Contracting States:
**DE FR GB IT SE**

(71) Applicant: **MITSUBISHI RAYON CO. LTD.**
**3-19, Kyobashi 2-chome Chuo-Ku**
**Tokyo 104(JP)**

(72) Inventor: **Kitagawa, Hiroshi**
**295, Takashima-cho**
**Moriyama-ku Nagoka-shi(JP)**

(72) Inventor: **Sato, Masaaki**
**2-1, Mataho-cho**
**Nishi-ku Nagoyashi(JP)**

(72) Inventor: **Shuto, Shoji**
**75, Midori-cho**
**Akeno Oita-shi(JP)**

(74) Representative: **Baillie, Iain Cameron et al,**
**c/o Ladas & Parry Isartorplatz 5**
**D-8000 München 2(DE)**

(54) Laminated pre-impregnated carbon fiber structures.

(57) A laminate is constructed of two layers of oriented carbon fibers impregnated with a matrix resin. One layer has a weight per surface of at least 50 g/m² and the other layer has a weight per surface of from 5 to 50 g/m² the second layer preferably also being very thin for example from 0.005 to 0.1 mm. The fibers in the two layers are at an angle of substantially 90° to each other preferably between 80 and 90°. In its preferred form the laminate is formed into a tube with the thin layer as the internal layer of the laminate and the fibers of the external layer being substantially parallel to the axis of the tube. The tube provides greater strength and resistance to deformation and is particularly useful in fishing rods.

*Fig. 2*

/

# LAMINATED PRE-IMPREGNATED CARBON
## FIBER STRUCTURES

## BACKGROUND OF THE INVENTION

Field of the Invention :

This invention relates to a 2-layer pre-impregnated sheet suitable for manufacture of a tubular body and to bodies manufactured from the carbon-fiber reinforced composite materials. Especially, it is concerned with tubular bodies which have a high compression strength for use particularly as fishing rods.

Tubular bodies manufactured from composite materials reinforced with carbon fiber are light in weight and have desirable strength and elasticity. Thus, these materials can be used for golf-shafts or fishing rods. The performance required for such materials increases yearly. Thus, there is an increasing requirement for fishing rods which are thinner, lighter and stronger that is have greater bending strength in the longitudinal direction. Special emphasis has been placed on increasing buckling strength against compression deformity in the cross sectional direction of the tubes.

This invention provides tubular bodies manufactured from composite materials reinforced with carbon fiber which satisfy the above higher performance requirements, and 2-layer pre-impregnated materials for manufacture of these tubes.

According to the invention there is provided a laminated pre-impregnated- carbon fiber sheet comprising a first sheet of oriented carbon fibers pre-impregnated with matrix resin which has a weight per unit area of over $50g/m^2$ and a second sheet of oriented carbon fibers impregnated with matrix resin with a weight per unit area of from 5 to $50g/m^2$ the directions of the fibers in the two sheets being at an angle of substantially $90°$.

There is also provided a tubular construction formed from said laminate wherein the direction of the fibers of the first sheet is substantially parallel to the axis of the tube.

In a preferred aspect of the invention the second carbon fiber reinforced sheet is made as thin as possible within the favourable weight per unit area of from 5 to 50g/m$^2$ especially with a thickness of more than 0.005 mm, preferably from 0.005 to 0.060 mm.

Such a very thin second carbon fiber reinforced sheet is used for the tubular bodies made of carbon-fiber reinforced composite materials of this invention and are uniform in thickness and have greater buckling strength to resist compression-deformity in the sectional direction in spite of the lighter weight.

The above-mentioned very thin second carbon fiber sheet can be obtained by directing carbon fibers in a fluid cascade, so as to form a very thin sheet with very little intertwining amongst the carbon-fibers.

By oriented carbon fiber sheets is meant the direction of all the fibers is the same i.e. they are parallel or uni-directional.

DESCRIPTION OF THE PRIOR ART

Conventionally, lighter and stronger tubular bodies have been manufactured by processing a sheet having fibers oriented or arranged in one direction by coiling on a mandrel whereby the direction of carbon fiber in the sheet is in the axial direction of the mandrel.  Such materials have been utilised for golf-shafts or fishing rods.

Such tubular bodies have higher elasticity, but are weaker in buckling strength when compression deforming strength is added laterally, and also, are liable to be cracked longitudinally.
In order to manufacture tubular bodies made of composite materials
reinforced with carbon fiber without the above defects, some inventions
have been made and one of them is described in Japanese Patent
Publication No. Sho 52-43409(1977). This invention is a method of
forming tubular bodies by the use of a mandrel after preparing a
pre-impregnated sheet by laminating a very thin glass fiber scrim
cloth on one side of a unidirectional carbon fiber impregnated sheet.
In this method, remarkable effects can be obtained for the ease of
handling at the coiling time onto the mandrel of the unidirectional
carbon fiber impregnated sheet.

The tubular bodies manufactured with carbon-fiber reinforced
composite materials by the above method show strong resistance to
the vertical splitting, and yet, it is still impossible to achieve
the desired buckling strength and torsional rigidity.

Another invention is described in Japanese Patent Publication
No. Sho 54-36624(1979).

In this method two pieces of a unidirectional carbon fiber
pre-impregnated sheet with a thickness of 0.25 mm are laminated to
provide an oblique crossing angle of from 3 to $90^{\circ}$ of the respective
oriented carbon fibers of the sheets and to form a double layer
pre-impregnated sheet, from which, tubular bodies are formed in
which the angles of the fibers in the tube are from 1.5 to $45^{\circ}$
in relation to the longitudinal axis of the tube.

This tube is superior to that disclosed in Japanese Patent
Publication No. Sho 52-43407(1977) in respect of torsional rigidity
of the tube, however, the bending elasticity is reduced, and the tube
still has unfavourable buckling strength which needs improvement.

Another manufacturing method for a pre-impregnated sheet with
higher performance is that of Japanese Patent Publication No. Sho-
52-5350(1977). As shown in Fig. 4 of that publication a unidirectional
carbon fiber tow (6) or bundle of fibers impregnated with matrix resin
is arranged on a releasing paper (7), and pressure is applied to the carbon-fiber bundle between the nip roll form the top and bottom faces, whereby a thinner sheet can be prepared by the appl 0 0 6 2 9 7 3 pressure to the carbon fibers constituting the bundle towards the directions as shown in the arrow marks (8) and (8').

However, while this method enables some diminshment in the thickness of the carbon-fiber bundle containing the matrix resin, it is impossible to manufacture the pre-impregnated sheet with a thickness less than 0.1 mm. It is very difficult to use this method for manufacturing the second unidirectional carbon fiber sheet as used in this invention.

BRIEF DESCRIPTION OF DRAWING:

Fig. 1 shows the oblique sectional view of the tubular body manufactured from carbon-fiber reinforced composite materials by this invention. Fig. 2 shows the oblique sectional view having a partial sectional view of the tube manufactured by carbon-fiber reinforced composite materials of this invention.

Fig. 3 shows a partially enlarged drawing of carbon-fiber pre-impregnated sheet used for manufacturing the tube body in this invention.

Fig. 4 shows a schematic diagram of the manufacture of the oriented pre-impregnated carbon fiber sheet.

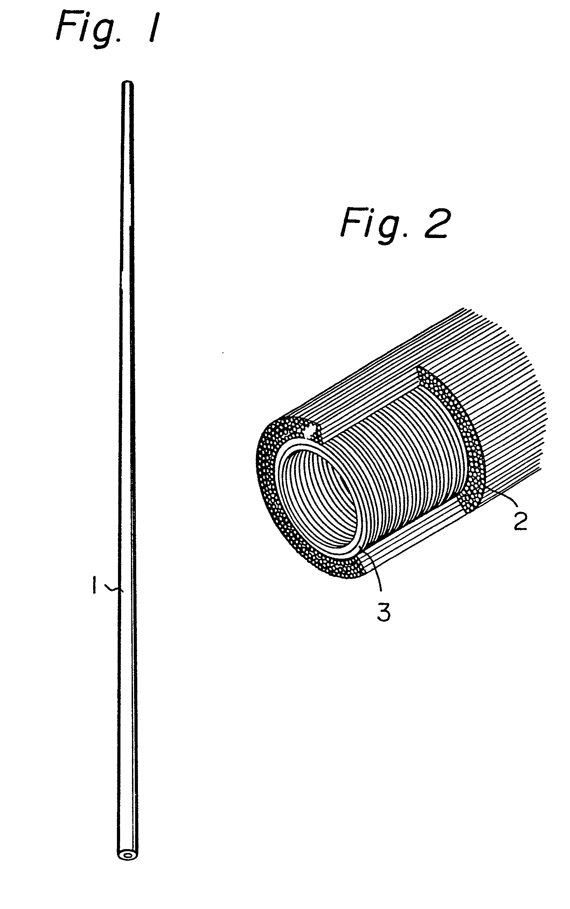

In Fig. 1 the tube is designated by 1.

In Fig. 2 _(2) denotes the tubular layer made of a first unidirectional or oriented carbon fiber sheet layer, in which the fibers are arranged nearly in parallel with the longitundinal direction of the tube manufactured, and (3) shows a tubular layer manufactured from a second unidirectional or oriented carbon fiber shett layer , in which the fibers are arranged nearly linearly or at right angles to longitudinal direction of the tubular body.

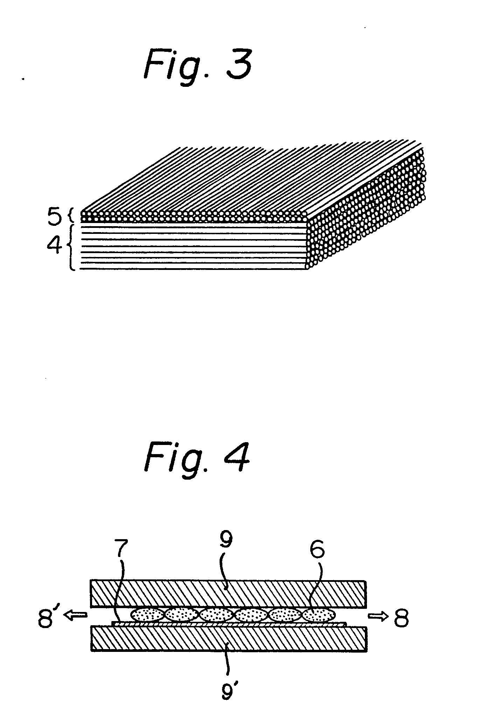

In Fig. 3 (4) denotes the first sheet of oriented carbon fibers and (5) shows the second sheet of oriented carbon fibers.

In Fig. 4 (6) is the matrix resin containing tows or bundles of carbon fibers, (7) is a release paper and (9), (9') are nip rollers. The tows (6) are spread by nip roller (9) and (9').

DESCRIPTION OF THE INVENTION:

Specifically in a two-layer carbon fiber impregnated sheet one sheet as shown on the partial structure in Fig. 3 has a weight per unit area of $50g/m^2$ or more including matrix resin. In particular the weight per unit area of the first sheet with or without matrix resin is from 50 to 300 $g/m^2$, especially when the second carbon fiber sheet has a weight per unit area of 7 to $40g/m^2$.

It is necessary to use the first carbon fiber sheet with a weight per unit area of at least 50 preferably 50 to $300g/m^2$, preferably in the range of from 80 to 200 $g/m^2$. The direction of the oriented carbon fibers of this first carbon fiber sheet is intended to be in the axial direction of the tubular body of this invention. Satisfactory physical characterstics for tubes cannot be secured with a weight per unit in the first sheet of less than 50 $g/m^2$. On the other hand an excessive weight per unit area in the first sheet tends to induce too high a rigidity in the final tubes which is not favourable, especially, for the manufacture of tubes used for fishing rods. Thus, the weight per unit area of the first carbon fiber sheet should preferably be from 80 to 200 $g/m^2$.

Also, it is necessary that the weight per unit area of the second oriented carbon fiber sheet should be from 5 to 50 $g/m^2$ preferably from 7 to 40 $g/m^2$. A thickness for the second sheet of over 0.005 mm, preferably from 0.01 to 0.060 mm is recommended.

When the weight per unit area of this second carbon fiber sheet is less than 5 $g/m^2$, it is difficult to make a carbon fiber reinforced plastic tube with higher buckling strength as intended by this invention, especially for use for fishing rods.

On the other hand, while a tube manufactured using a second carbon fiber sheet with the weight per unit area of over 50 $g/m^2$ has increased buckling strength, this buckling strength becomes excessive and the bending characteristics required for the carbon fiber reinforced tube are adversely effected.

For the manufacture of a carbon fiber reinforced tube which will satisfy the desired balance of variously required performance characteristics the second carbon fiber sheet has a weight per unit area of 5 to 50 g/m$^2$ preferably 7 to 40 g/m$^2$.

Moreover, the thickness of the second carbon fiber sheet is important, and a thickness of from 0.005 mm to 0.1 mm, especially within the range of 0.01 to 0.060 mm is recommended.

A thickness of less than 0.005 mm may not be sufficient for manufacturing a carbon-fiber reinforced tube with adequate buckling strength even though the weight per unit area is within the above range.

When the thickness of the second sheet is less than 0.05 mm, moldability of the carbon-fiber reinforced tube may be more difficult and it may be impossible to manufacture a carbon-fiber reinforced tube in which the buckling strength is adquately in balance with the bending characteristics of the tube.

As it is necessary that the weight per unit area of the above mentioned second oriented carbon fiber sheet should be as low as from 5 to 50 g/m$^2$ especially 7 to 40 g/m$^2$, and its thickness should be as little as from 0.005 to 0.1 mm, especially, from 0.01 to 0.060mm, manufacture may be very difficult. The following method can be employed for manufacturing the second oriented carbon fiber sheet. Carbon fiber tow or bundles of fibers is supplied into a cascade with a flow of water, thus the bundle of carbon fibers is split by the water cascade to form into an oriented carbon fiber sheet. This sheet is received on to a release paper for drying, and then the sheet is impregnated with the matrix resin.

This method is very favourable because of the affinity between the carbon fiber and water, which permits easy splitting or breaking up of the bundles of fibers and is thus a very effective method for manufacturing the thinner carbon fiber sheets.

By this method, it is possible to manufacture thin-layer oriented carbon-fiber sheets as thin as from 0.005 to 0.1 mm especially from 0.01 to 0.06mm.

In manufacturing the pre-impregnated sheet by laminating a first oriented carbon fiber sheet with a second oriented carbon fiber sheet, it is necessary to laminate the first sheet to the second sheet whereby the directions of the fibers are nearly at right angles.

The greater the deviation of the angle between the fibers from 90° the more the buckling strength of carbon fiber reinforced plastic tube made from the laminate is lowered until it is impossible to achieve the objective of this invention. While the angle should be substantially 90° there can be a deviation within the range 80 - 90° preferably 85 - 90°.

Matrix resins which can be employed include thermoplastic resins such as polyamide, polyester, polycarbonate, polyacetal, polyether ether ketone and thermosetting resins such as epoxy resin, unsaturated polyester resin, vinyl ester resin and polyimide resin.

The carbon fiber reinforced tube of this invention can be manufactured by applying the first sheet to provide that the direction of the fibers in the first sheet is nearly parallel to the longitudinal axis of the tube, while the direction of the fibers in the second sheet is at right angles to the axis (or direction of the fibers of the first sheet) i.e. is coiled about the tube axis.

The formation of this tubular structure can be achieved by a thermo forming method, or, it is possible to use an ordinary heat-processing furnace or a microwave furnace as heat source, or the carbon fibers can be heated with an electric current.

The carbon fiber reinforced tubes manufactured by this invention have higher bending strength in the longitudinal direction of
the tubular structure and the second carbon fiber layer directed about the
circumferential direction of the tube enables an increase in the
buckling strength of the tube as against the compression-deformation
of the sectional direction of the tube as caused by the bending
strength in the longitudinal direction of the tube. The carbon
fiber reinforced tube of this invention showing the above mentioned
characteristics is particularly useful for fishing rods.

The invention will now be illustrated in the following
example.

Example:

Carbon-fiber tow was impregnated with a matrix resin in a conventional
method to form a first oriented carbon fiber sheet with fiber weight
of 160 g/m$^2$. A carbon fiber tow was poured into a cascade of water
to form an oriented carbon fiber sheet, and this sheet was impregnated
with matrix resin. Thus second oriented carbon fiber impregnated
sheet having the thickness and weight of carbon fiber as shown in
Table 1 were manufactured.

The first carbon fiber sheet was laminated to the second
carbon fiber sheet to make the angle of nearly 90° in the carbon fiber
directions to form a two-layer impregnated laminate.

These impregnated laminate sheets were coiled (3 ply) around
a mandrel to form nearly parallel angle between the fiber direction
of the carbon fibers in the first sheet and the longitudinal axis of
the mandrel. After heating and processing the mandrel was drawn
and a carbon fiber reinforced plastic tube was obtained. The diameter
of the plastic tube was 20 mm. The thus obtained carbon fiber
reinforced tube was evaluated on its characteristics which were shown
in Table 1.

Compression Strength
Static weight as shown in Table 1 was applied to upper circular section of the carbon fiber reinforced plastic tube.  The deformation of the plastic tube was measured and shown in Table 1.

Table 1

| Experiment No. | Oriented carbon fiber sheet | | | | | Compression Strength | |
|---|---|---|---|---|---|---|---|
| | First Layer | | Second Layer | | | | |
| | Thickness (mm) | Resin Content (%) | Weight per $m^2$ | Thickness ($\mu$) | Resin Content (%) | Load (kg) | Deformation (mm) |
| 1 | 0.15 | 37.5 | 15g | 29 | 28 | 37 | 1.7 |
| 2 | 0.15 | 37.5 | 18g | 32 | 30 | 41 | 1.5 |
| 3 | 0.15 | 40.0 | 30g | 38 | 30 | 58 | 1.2 |

CLAIMS :

1. A laminated pre-impregnated carbon fiber sheet comprising a first sheet of oriented carbon fibers pre-impregnated with matrix resin which has a weight per unit area of over $50g/m^2$ and a second sheet of oriented carbon fibers impregnated with matrix resin with a weight per unit area of from 5 to $50g/m^2$ the directions of the fibers in the two sheets being at an angle of substantially $90^o$.

2. A sheet according to Claim 1 in which the angle between the respective fiber orientations is from 80 to $90^o$.

3. A sheet according to either of Claims 1 and 2 in which the content of carbon fiber per unit area in the second sheet is from 7 to $40g/m^2$.

4. A sheet according to any one of Claims 1 to 3 wherein the thickness of the second sheet is from 0.005 to 0.1mm.

5. A sheet according to Claim 4 wherein the thickness of the second sheet is from 0.01 to 0.06 mm.

6. A method of preparing a laminated sheet according to Claim 1 wherein the second sheet is formed by splitting and sheet forming a carbon fiber tow by passing into a cascade of flowing water, drying, impregnating the resulting sheet and employing as the second sheet in constructing said laminate.

7. A sheet according to any one of Claims 1 to 6 wherein the angle between the fibers is from 85 to $90^o$.

8. A tubular structure formed from a laminate according to any one of Claims 1 to 7 wherein the fibers of the first sheet are substantially parallel to the direction of axes of the tube.

9.     A method of forming a tubular structure wherein a laminate sheet according to any one of Claims 1 to 7 is coiled about a mandrel whereby the direction of fibers in the first sheet is substantially parallel to the longitundinal axis of the mandrel, heating to cure the resin, removing the mandrel.

10.     A carbon fiber reinforced plastics tube according to Claim 8 in a fishing rod construction.

Fig. 1

Fig. 2

*Fig. 3*

5{
4{

*Fig. 4*

7    9    6

8′ ⟸          ⟹ 8

9′